# DEMANDE DE BREVET EUROPEEN

(11) **EP 3 683 059 A1**
(43) Date de publication de la demande: **22.07.2020**
(21) Numéro de dépôt: 20152224.0
(22) Date de dépôt: 16.01.2020
(51) Int. Cl.: B32B 41/00, B32B 37/22, B32B 21/00

(54) **INSTALLATION ET PROCEDE DE PLACAGE DOUBLE-FACE**

(30) Priorité: 16.01.2019 FR 1900397
(71) Demandeur: Etablissements de la Boisserolle, 71960 Prisse (FR)
(72) Inventeur: QUAGLIETTI, Jean-Pierre, 71870 Hurigny (FR); BOILLON, Pascal, Joseph, Maurice, 71000 Macon Loche (FR)
(74) Mandataire: Weber, Jean-François

(57) **Abrégé**

- Installation et procédé de placage double-face.
- L'invention concerne une installation (1) de placage pour revêtir de film des panneaux (2), ladite installation (1) comprenant une station de pré-encollage double-face (3) et une station de placage double-face (4) qui elle-même inclut :
- un poste d'alimentation en film, comprenant des première et deuxième bobines à partir desquelles sont déroulées des première et deuxième nappes de film (5A, 6A),
- un poste d'application (7) pour effectuer une opération d'application de film comprenant des premier et deuxième rouleaux de pressage (8, 9) ainsi que des moyens d'entraînement (8, 9) pour faire défiler entre lesdits rouleaux de pressage (8, 9) à la fois lesdites première et deuxième nappes (5A, 6A) et chaque panneau (2) pré-encollé interposé entre lesdites nappes (5A, 6A),
- et un poste de coupe (11) desdites nappes de film (5A, 6A).
- Placage double-face de panneaux.

## Description

La présente invention se rapporte au domaine général du placage de film sur des panneaux plans rigides, par exemple des panneaux en bois ou en dérivé de bois, en vue d'obtenir des panneaux revêtus destinés par exemple au secteur de l'ameublement ou de l'aménagement intérieur ou extérieur.

L'invention concerne plus précisément une installation et un procédé de placage pour revêtir de film souple des panneaux plans rigides et individualisés présentant chacun des faces endroit et envers opposées.

Il est connu de coller des films souples de PVC sur des panneaux plans en bois ou dérivé de bois (par exemple en bois aggloméré) afin d'obtenir un panneau revêtu de PVC. Le revêtement PVC permet en effet de protéger et renforcer le panneau en dérivé de bois, et de lui conférer un aspect esthétique attractif. Des panneaux ainsi revêtus peuvent être utilisés pour fabriquer du mobilier ou des éléments d'aménagement intérieur ou extérieur (cloison ou autre). Les moyens et procédés industriels jusqu'à présent disponibles pour produire de tels panneaux revêtus de film PVC ne sont toutefois pas optimisés, notamment pour la production de panneaux revêtus de films PVC à la fois sur leurs faces endroit et envers. Les moyens et procédés connus pour procéder à un placage double face de film PVC reposent en effet sur la mise en oeuvre de nombreuses opérations manuelles et ne permettent pas d'obtenir des cadences de production élevées avec un niveau de qualité optimale. Il en résulte une impossibilité en l'état actuel de produire rapidement des quantités importantes de panneaux plaqués double face, avec une cadence et un niveau de qualité élevés.

Les objets assignés à l'invention visent en conséquence à porter remède aux inconvénients exposés dans ce qui précède et à proposer une nouvelle installation et un nouveau procédé de placage permettant de fabriquer des panneaux plaqués double face à cadence élevée et à prix de revient maîtrisé, en limitant les manipulations fastidieuses et inconfortables pour les opérateurs.

Un autre objet de l'invention vise à proposer une nouvelle installation et un nouveau procédé de placage adaptables à des panneaux de natures et compositions très variées.

Un autre objet de l'invention vise à proposer une nouvelle installation de placage de construction particulièrement simple et robuste.

Un autre objet de l'invention vise à proposer une nouvelle installation de placage compacte et fiable.

Un autre objet de l'invention vise à proposer une nouvelle installation et un nouveau procédé de placage permettant de limiter les pertes et rebuts de matières premières.

Un autre objet de l'invention vise à proposer une nouvelle installation et un nouveau procédé de placage permettant un collage efficace et durable d'un film souple sur les deux faces du panneau à revêtir.

Un autre objet de l'invention vise à proposer une nouvelle installation de placage qui permet de travailler avec des bobines ou rouleaux de film souple de taille importante tout en assurant un niveau élevé de qualité du placage et une grande précision de placage.

Un autre objet de l'invention vise à proposer une nouvelle installation et un nouveau procédé de placage présentant un degré élevé d'automatisation.

Un autre objet de l'invention vise à proposer une nouvelle installation dont la conception et la construction permettent de faciliter les opérations de préparation préalables à la production.

Les objets assignés à l'invention sont atteints à l'aide d'une installation de placage pour revêtir de film souple des panneaux plans rigides et individualisés présentant chacun des faces endroit et envers opposées, ladite installation comprenant une station de pré-encollage double-face pour enduire lesdites faces endroit et envers de chaque panneau d'une couche de colle, afin d'obtenir des panneaux pré-encollés, ladite installation comprenant en outre à l'aval de ladite station de pré-encollage double-face une station de placage double-face qui elle-même inclut :
- un poste d'alimentation en film souple, comprenant des première et deuxième bobines de film souple à partir desquelles sont respectivement déroulées des première et deuxième nappes de film,
- un poste d'application pour effectuer une opération d'application de film souple simultanément sur les faces endroit et envers de chaque panneau pré-encollé, ledit poste d'application comprenant des premier et deuxième rouleaux de pressage ainsi que des moyens d'entraînement pour faire défiler entre lesdits rouleaux de pressage à la fois lesdites première et deuxième nappes et chaque panneau pré-encollé interposé entre lesdites nappes, lesdits premier et deuxième rouleaux de pressage étant conçus pour presser localement les première et deuxième nappes de film contre respectivement la face endroit et la face envers de chaque panneau pré-encollé défilant entre lesdits rouleaux de pressage,
- et un poste de coupe pour effectuer une opération de coupe desdites nappes de film après chaque opération d'application,
lesdits moyens d'entraînement étant conçus pour entraîner le déplacement desdites première et deuxième nappes de film selon un premier sens au cours de chaque opération d'application, ladite station de placage comprenant en outre :
- un dispositif d'entraînement activable conçu pour entraîner lesdites nappes en déplacement selon un deuxième sens opposé audit premier sens lorsqu'il est activé,
- un dispositif de contrôle du dispositif d'entraînement conçu pour activer temporairement et automatiquement ce dernier après chaque opération de coupe et avant chaque opération d'application.

Les objets assignés à l'invention sont également atteints à l'aide d'un procédé de placage pour revêtir de film souple des panneaux plans rigides et individualisés présentant chacun des faces endroit et envers opposées, ledit procédé comprenant une étape de pré-encollage double-face pour enduire lesdites faces endroit et envers de chaque panneau d'une couche de colle, afin d'obtenir des panneaux pré-encollés, ledit procédé comprenant en outre, après ladite étape de pré-encollage double-face, une étape de placage double-face desdits panneaux pré-encollés qui elle-même inclut :
- une opération d'application de film souple simultanément sur les faces endroit et envers de chaque panneau pré-encollé, au cours de laquelle on interpose chaque panneau pré-encollé entre des première et deuxième nappes de film souple déroulées à partir respectivement d'une première et d'une deuxième bobine, et on fait défiler entre des premier et deuxième rouleaux de pressage à la fois lesdites première et deuxième nappes et chaque panneau pré-encollé interposé entre elles, lesdits premier et deuxième rouleaux de pressage pressant localement les première et deuxième nappes de film contre respectivement la face endroit et la face envers de chaque panneau encollé défilant entre lesdits rouleaux de pressage,
- et une opération de coupe desdites nappes de film après chaque opération d'application,
et au cours de chaque opération d'application, lesdites première et deuxième nappes de film se déplacent selon un premier sens, tandis qu'après chaque opération de coupe et avant chaque opération d'application, lesdites première et deuxième nappes de film se déplacent selon un deuxième sens opposé audit premier sens.

D'autres particularités et avantages de l'invention apparaîtront et ressortiront plus en détails à la lecture de la description faite ci-après, en référence aux dessins annexés, donnés à titre d'exemples purement illustratifs et non limitatifs, dans lesquels :
Figure 1 illustre selon une vue schématique latérale, une installation de placage conforme à l'invention, qui se trouve dans une configuration fonctionnelle fermée, prête à revêtir de film souple des panneaux plans rigides.
Figure 2 illustre, selon une vue schématique latérale, la machine de la figure 1 dans une configuration ouverte permettant l'installation d'une nappe inférieure de film déroulée à partir d'une bobine inférieure d'alimentation.
Figure 3 est une vue d'un détail de la figure 1, un panneau plan rigide étant en train d'être soumis à une opération d'application de film souple simultanément sur ses faces endroit et envers.

L'invention concerne une installation et un procédé de placage pour revêtir de film souple des panneaux plans rigides et individualisés. Dans ce qui suit, l'installation et le procédé seront décrits conjointement, étant entendu que l'installation 1 permet avantageusement de mettre en oeuvre le procédé selon l'invention, tandis que le procédé selon l'invention est avantageusement conçu pour être mis en oeuvre par l'installation 1.

Dans ce qui suit, les éléments descriptifs relatifs à l'installation 1 de placage sont donc applicables au procédé et réciproquement.

Ceci étant, il est parfaitement envisageable, sans pour autant que l'on sorte du cadre de l'invention, que l'installation 1 soit capable de mettre en oeuvre un procédé différent du procédé objet de l'invention, de même qu'il est parfaitement envisageable que le procédé selon l'invention puisse être mis en œuvre au moyen d'une installation autre que l'installation 1 décrite ici.

L'installation 1 et le procédé de placage selon l'invention visent à revêtir de film souple des panneaux 2 préfabriqués qui présentent un caractère plan et rigide. Le terme *« plan »* désigne ici le fait que chaque panneau 2 à revêtir de film souple au moyen de l'installation 1 et du procédé selon l'invention ne présente sensiblement pas de courbure et affecte la forme d'une plaque plane. Le terme « *rigide* » désigne quant à lui ici la caractéristique selon laquelle chaque panneau 2 à revêtir de film souple présente une tenue mécanique propre, c'est-à-dire qu'il est sensiblement dépourvu de flaccidité, au contraire par exemple d'un matériau souple enroulable. L'installation 1 et le procédé de placage selon l'invention sont conçus pour revêtir de film souple des panneaux 2 plans et rigides mais également individualisés, c'est-à-dire que chaque panneau 2 à revêtir de film souple est indépendant et séparé des autres panneaux préalablement à la mise en œuvre de l'opération de placage. Les panneaux 2 plans, rigides et individualisés à revêtir présentent chacun des faces endroit 2A et envers 2B opposées. Les faces endroit 2A et envers 2B sont sensiblement planes, parallèles l'une à l'autre et séparées par une distance qui correspond à l'épaisseur du panneau 2. Chaque panneau 2 présente par exemple une forme sensiblement parallélépipédique présentant une épaisseur globalement uniforme qui est faible par rapport à la largeur et à la longueur dudit parallélépipède. Les panneaux 2 peuvent être réalisés à partir de toutes sortes de matériaux. De préférence, chaque panneau 2 est réalisé en bois (par exemple bois panneautés à une couche ou multicouches, contreplaqué latté / lamellé, contreplaqué à plis, lamibois, etc.) ou à base de copeaux de bois (panneau de particules plaqués, mélaminés ou stratifiés, panneau de lamelles minces (OSB), etc.) ou à base de fibres de bois (panneau de type MDF par exemple).

Les panneaux 2 peuvent également être métalliques, ou être de nature composite et présenter par exemple une structure en nid d'abeilles. Bien entendu ces exemples ne sont pas limitatifs et l'invention n'est pas limitée à une nature particulière de panneaux, même si le recours à des panneaux à base de bois ou dérivé de bois est préféré.

Le film souple destiné à revêtir les panneaux 2 pour les décorer et/ou les protéger peut lui aussi être réalisé à partir de matériaux de diverses natures, par exemple en PVC souple (PVC plastifié) ou tout autre matériau plastique souple, appartenant par exemple à la famille des polymères (par exemple polymère thermoplastique ou élastomère). De préférence, le film souple se présente sous la forme d'une bande de grande longueur, dépourvue de rigidité propre et présentant un caractère flasque et enroulable. Plus spécifiquement et avantageusement, le film souple se présente sous la forme d'une bande longue dotée d'une souplesse et d'une flexibilité suffisantes pour que ladite bande puisse être enroulée en bobine ou repliée sur elle-même. L'épaisseur du film souple est par exemple comprise entre sensiblement 20 et 2 500 µm, de préférence entre sensiblement 80 et 450 µm.

L'installation 1 comprend une station de pré-encollage double face 3 pour enduire lesdites faces endroit 2A et envers 2B de chaque panneau 2 d'une couche de colle, afin d'obtenir des panneaux 2 pré-encollés dont chaque face endroit 2A et envers 2B est pré-encollée. Le procédé selon l'invention comprend donc une étape de pré-encollage double face pour enduire lesdites faces endroit 2A et envers 2B de chaque panneau 2 d'une couche de colle, afin d'obtenir des panneaux 2 pré-encollés. La station de pré-encollage double face 3 et l'étape de pré-encollage correspondante permettent ainsi d'appliquer, simultanément ou séquentiellement, un matériau adhésif (colle) sur les faces endroit 2A et envers 2B de chaque panneau 2, de façon à former sur chacune desdites faces 2A, 2B une couche de colle de préférence sensiblement uniforme et continue, destinée à assurer ensuite la liaison entre le film souple et la face concernée 2A, 2B du panneau 2. La colle est bien entendue choisie en fonction de la nature du panneau 2 d'une part et de celle du film souple de revêtement d'autre part, pour assurer une liaison efficace, robuste et durable entre le film souple et chaque face de 2A, 2B du panneau 2, étant entendu qu'il est en outre parfaitement envisageable de recourir à un film souple pour recouvrir la face endroit 2A qui diffère de celui utilisé pour recouvrir la face envers 2B opposée. La colle se présente de préférence sous la forme d'un matériau liquide ou semi-liquide, présentant une viscosité adaptée au mode d'application retenu. La colle est avantageusement un adhésif thermofusible, comprenant par exemple une colle polyuréthane. La station de pré-encollage 3 peut inclure par exemple un dispositif d'encollage double face par pulvérisation de colle, ou un dispositif à rouleaux, ou encore un dispositif à lèvres.

De préférence, la station de pré-encollage 3 assure une application automatique ou semi-automatique d'une couche de colle sur chacune des faces endroit 2A et envers 2B, et comporte par exemple à cette fin un fondoir destiné à recevoir une colle thermofusible et à fluidifier cette dernière par chauffage, un bac supérieur avec un rouleau applicateur supérieur et un doseur supérieur pour régler le débit de colle, ainsi qu'un bac inférieur avec un rouleau applicateur inférieur et un doseur inférieur de réglage du débit de colle, pour encoller de préférence simultanément chacune des faces endroit 2A et envers 2B. L'installation 1 pourra ainsi mettre en œuvre en tant que station de pré-encollage double face 3 une encolleuse double face du commerce bien connue en tant que telle, et par exemple une encolleuse double face de panneaux plans tels que celles actuellement utilisées pour la pose de placage stratifié. Un tel matériel d'encollage est bien connu en tant que tel et n'est donc pas décrit ou illustré en détails ici. L'invention n'est bien entendu pas limitée à une station de pré-encollage 3 automatique ou semi-automatique, et peut mettre en œuvre une station de pré-encollage 3 manuel. En sortie de la station de pré-encollage, à l'issue de l'étape de pré-encollage double face, chaque panneau 2 forme ainsi un panneau 2 pré-encollé, avec sur chacune de ses faces endroit 2A et envers 2B une couche de colle active.

Comme illustré aux figures, l'installation 1 comprend en outre, une station de placage double face 4 pour appliquer sur chacune des faces endroit 2A et envers 2B préencollées une nappe de film souple. La station de placage double face 4 est positionnée à l'aval de la station de pré-encollage double face 3 relativement au sens de progression de chaque panneau 2 à l'intérieur de l'installation 1. Ce sens de progression est celui qui amène chaque panneau 2 d'un état préalable « à *revêtir »* à un état revêtu. Par conséquent, la station de placage double face 4 est conçue pour traiter les panneaux 2 pré-encollés issus de la station de pré-encollage double face 3. De manière analogue, le procédé comprend donc, après ladite étape de pré-encollage double face, une étape de placage double face desdits panneaux 2 pré-encollés.

Comme illustré aux figures, la station de placage double face 4 inclut elle-même un poste d'alimentation en film souple, comprenant des première et deuxième bobines 5, 6 de film souple à partir desquelles sont respectivement déroulées des première et deuxième nappes de film 5A, 6A.

Les première et deuxième bobines 5, 6 sont préférentiellement identiques, et présentent par exemple une largeur de laize de 127 ou 142 cm, étant entendu que l'invention n'est pas limitée à une dimension de laize spécifique. La longueur du film souple enroulé sur chaque bobine est comprise par exemple entre 30 et 5 000 m, de sorte que la masse de chaque bobine 5, 6 peut être comprise par exemple entre 130 et 350 kg environ. De préférence, comme illustré aux figures, la première bobine 5 est disposé plus haut que la deuxième bobine 6, de sorte que la première bobine 5 forme une bobine supérieure tandis que la deuxième bobine 6 forme une bobine inférieure. Les première et deuxième bobines 5, 6 sont conçues pour tourner selon des axes de rotation respectifs parallèles entre eux et sensiblement parallèles au plan horizontal. De préférence, les films souples dévidés à partir respectivement de la première et de la deuxième bobine 5, 6 sont identiques, mais il est toutefois parfaitement envisageable, sans pour autant que l'on sorte du cadre invention, que le film souple dévidé à partir de la première bobine 5 soit différent de celui dévidé à partir de la deuxième bobine 6. Bien entendu, le poste d'alimentation est pourvu de moyens permettant le remplacement des première et deuxième bobines 5, 6 lorsque tout le film souple desdites bobines 5, 6 a été consommé.

De façon avantageuse, la station de placage double face 4 est positionnée totalement à l'aval de la station de pré-encollage double face 3. Une telle configuration permet une meilleure modularité de l'installation 1, car elle facilite l'entretien de la station de placage 4 et de la station de pré-encollage 3, mais également une continuité de la production au cas où l'une desdites deux stations (de placage double face 4 et de pré-encollage 3) tombe en panne, l'autre desdites deux stations toujours opérationnelle pouvant être associée à une station complémentaire elle aussi opérationnelle, ou bien encore être associée à une équipe effectuant manuellement l'opération devant normalement être effectuée par la station inopérante. Un autre avantage de cette configuration est qu'elle permet de mettre en œuvre des panneaux 2 de tailles et d'épaisseurs variées facilement, et donc de calibrer aisément et rapidement le placage et l'encollage de ces derniers. Ceci se réalise notamment en associant la station de placage 4 et la station de pré-encollage 3 selon une ou plusieurs différentes configurations, le réglage de l'une desdites deux stations n'étant pas gêné par l'encombrement de l'autre desdites deux stations, quels que soient leurs encombrements respectifs. En particulier, lesdites première et deuxième bobines 5, 6 sont de préférence positionnées à l'aval de ladite station de pré-encollage 3 (avantageusement selon le premier sens S3, lequel sera détaillé ci-après). La station de placage 4 et la station de pré-encollage 3 sont de manière préférentielle positionnées à proximité immédiate l'une de l'autre, et éventuellement attachées mécaniquement l'une à l'autre, de façon à éviter que lesdites couches de colle (sur les faces endroit 2A et envers 2B des panneaux 2 pré-encollés) sèchent entre lesdites stations de pré-encollage 3 et de placage 4.

La station de placage double face 4 inclut également un poste d'application 7 pour effectuer une opération d'application de film souple simultanément sur les faces endroit 2A et envers 2B de chaque panneau 2 pré-encollé, ledit poste d'application 7 étant alimenté en film souple par les bobines 5, 6 dudit poste d'alimentation. Plus précisément, le poste d'application comprend des premier et deuxième rouleaux de pressage 8, 9 ainsi que des moyens d'entraînement pour faire défiler entre lesdits rouleaux de pressage 8, 9 à la fois lesdites première et deuxième nappes de film 5A, 6A et chaque panneau 2 pré-encollé interposé entre lesdites nappes 5A, 6A. Les premier et deuxième rouleaux de pressage 8, 9 sont de préférence disposés l'un au-dessus de l'autre, formant ainsi respectivement un rouleau supérieur de pressage et un rouleau inférieur de pressage, l'écart entre les premier et deuxième rouleaux de pressage 8, 9 autorisant le passage entre lesdits rouleaux 8, 9 d'un empilement formé des première et deuxième nappes 5A, 6A et d'un panneau 2 pré-encollé interposé entre elles. Les rouleaux de pressage 8, 9 sont conçus pour tourner selon des axes de rotation respectifs parallèles entre eux, et qui sont de préférence parallèles à l'axe de rotation chacune des première et deuxième bobines 5, 6, lesdits axes de rotation desdits rouleaux de pressage 8, 9 étant disposés l'un au-dessus de l'autre de façon à s'inscrire tous deux dans un seul et même plan vertical. Dans cette configuration préférentielle, chaque panneau 2 pré-encollé défile avantageusement entre les rouleaux de pressage 8, 9 selon un mouvement de translation horizontale, perpendiculairement audit plan vertical dans lequel s'inscrivent à la fois les deux axes de rotation respectifs des rouleaux de pressage 8, 9. Lesdits premier et deuxième rouleaux de pressage 8, 9 sont conçus pour presser localement les première et deuxième nappes de film 5A, 6A contre respectivement la face endroit 2A et la face envers de 2B de chaque panneau 2 pré-encollé défilant entre lesdits rouleaux de pressage 8, 9. Les premier et deuxième rouleaux de pressage 8, 9 permettent ainsi de presser simultanément respectivement la première nappe de film 5A et la deuxième nappe de film 6A contre respectivement la face endroit 2A et la face envers 2B, alors que la colle déposée sur chacune des faces endroit 2A et envers 2B est encore active, c'est-à-dire qu'elle n'a pas encore prise. Grâce à cet effort de pression exercée simultanément sur les faces endroit 2A et envers 2B de chaque panneau 2 défilant entre les rouleaux de pressage 8, 9, chacune des première et deuxième nappes 5A, 6A adhère respectivement à la face endroit 2A et envers 2B, ce qui permet d'obtenir un complexe multi-couches formé par l'empilement de la première nappe 5A, dudit panneau 2 et de la deuxième nappe 6A, chacune des couches dudit complexe étant de préférence intimement et uniformément liée à la couche adjacente au moyen de la colle préalablement déposée sur les faces endroit 2A et envers 2B par la station de pré-encollage double-face 3.

De préférence, le poste d'alimentation en film souple et le poste d'application 7 sont distincts l'un de l'autre, et éventuellement situés à une distance minimum l'un de l'autre, bien qu'ils soient avantageusement rattachés mécaniquement au même ensemble, la station de placage 4. Le poste d'alimentation en film souple est avantageusement situé à l'amont du poste d'application, dans le sens de dévidement des première et deuxième nappes 5A, 6A. Plus précisément, lesdits premier et deuxième rouleaux de pressage 8, 9 sont préférentiellement distincts des première et deuxième bobines 5, 6 de film souple, et plus préférentiellement situés à distance de ces dernières. Une telle configuration permet de mieux maîtriser l'application des première et deuxième nappes 5A, 6A respectivement sur les faces endroit 2A et envers 2B de chaque panneau 2 pré-encollé, par exemple en diminuant le risque qu'il se forme un pli du film, et plus précisément des nappes 5A, 6A, en tendant celles-ci entre les première et deuxième bobines 5, 6 et les premier et deuxième rouleaux de pressage 8, 9, respectivement, tout en favorisant leur application uniforme sur leurs faces respectives.

Le procédé de placage selon l'invention, avantageusement mis en œuvre au moyen de l'installation 1, comprend donc, après ladite étape de pré-encollage double face, une étape de placage double face dudit panneau 2 pré-encollé, étape de placage double face qui elle-même inclut une opération d'application de film souple simultanément sur les faces endroit 2A et envers de 2B de chaque panneau 2 pré-encollé, au cours de laquelle :
- on interpose chaque panneau 2 pré-encollé entre les première et deuxième nappes 5A, 6A de film souple déroulées à partir respectivement des première et deuxième bobines 5, 6,
- et on fait défiler entre les premier et deuxième rouleaux de pressage 8, 9 à la fois lesdites première et deuxième nappe 5A, 6A et chaque panneau 2 pré-encollé interposé entre elles, lesdits premier et deuxième rouleaux de pressage 8, 9 pressant localement les première et deuxième nappes de film 5A, 6A contre respectivement la face endroit 2A et la face envers 2B de chaque panneau 2 pré-encollé défilant entre lesdits rouleaux de pressage 8, 9.

Ainsi, grâce à l'installation et au procédé de placage selon l'invention, la première nappe de film 5A est pressée contre la face endroit 2A selon une ligne ou bande de pression qui s'étend transversalement sur la largeur de chaque panneau 2, perpendiculairement à la direction de défilement du panneau 2 concerné, ladite ligne ou bande de pression se déplaçant continûment le long du panneau 2 concerné, sur toute la face endroit 2A, entre chaque bord libre avant 20 et arrière 21 du panneau 2 au fur et à mesure de l'avancement de ce dernier entre les rouleaux 8, 9. Le même processus s'applique pour la face envers 2B et la deuxième nappe 6B rapportée contre la face envers 2B et pressée contre cette dernière par le deuxième rouleau de pressage 9. Le recours à des rouleaux de pressage 8, 9 permet ainsi d'obtenir une liaison extrêmement performante entre le panneau 2 et chacune des première et deuxième nappes 5A, 6A, évitant d'avoir à recourir à des opérations de marouflage après collage, qui pourraient laisser des traces sur la surface du revêtement de film souple, notamment lorsque ce dernier est un film de PVC souple.

Afin de favoriser une application uniforme, les rouleaux de pressage 8, 9 présentent des largeurs respectives sensiblement identiques et supérieures ou égales à la largeur des première et deuxième nappes de film 5A, 6A, largeur de film qui correspond elle-même sensiblement à la largeur de chaque panneau 2 à revêtir. Les premier et deuxième rouleaux de pressage 8, 9 sont avantageusement sensiblement identiques l'un à l'autre et présentent de préférence chacun une surface cylindrique sensiblement lisse.

Il est cependant parfaitement envisageable de recourir à des premier et deuxième rouleau de pressage 8, 9 différents, qui présentent par exemple des diamètres respectifs différents et/ou des états de surface respectifs différents, l'un et/ou l'autre desdits premier et deuxième rouleaux de pressage 8, 9 pouvant par exemple présenter non pas une surface lisse mais une surface texturée avec des creux et des reliefs.

De préférence, la surface de chaque rouleau de pressage 8, 9 est formée d'une couche de matériau souple, par exemple d'une couche en caoutchouc ou en élastomère, de sorte que chacun desdits premier et deuxième rouleaux de pressage 8, 9 est avantageusement formé dans ce cas par un cylindre gommé. Le recours à de tels cylindres gommés pour former les rouleaux de pressage 8, 9 permet d'instaurer une certaine adhérence locale entre les premier et deuxième rouleaux de pressage 8, 9 d'une part et respectivement les première et deuxième nappes de films 5A, 6A d'autre part, ce qui favorise une application efficace et régulière. L'opération d'application de film souple au moyen des premier et deuxième rouleaux de pressage 8, 9 se déroule de préférence à température ambiante, mais il est alternativement envisageable que le premier et/ou le deuxième rouleau de pressage 8, 9 soi(en)t chauffé(s) pour presser à chaud les première et deuxième nappes de film 5A, 6A contre respectivement la face endroit 2A et la face envers 2B.

Chacune des première et deuxième bobines 5, 6 de film souple alimente ainsi respectivement chacun des premier et deuxième rouleaux de pressage 8, 9 de manière continue, tandis que les panneaux 2 pré-encollés défilent de manière individualisée entre les premier et deuxième rouleaux de pressage 8, 9, conjointement avec les première et deuxième nappes de film 5A, 6A disposées respectivement sur et sous le panneau 2, pour revêtir respectivement les faces endroit 2A et envers de 2B de chaque panneau 2 pré-encollé. Afin d'individualiser chaque panneau 2 revêtu à l'issue de l'opération d'application effectuée au moyen du poste d'application 7, la station de placage double face 4 inclut également un poste de coupe 11 pour effectuer une opération de coupe desdites nappes de film 5A, 6A après chaque opération d'application menée au moyen des premier et deuxième rouleaux de pressage 8, 9. Le procédé selon l'invention comprend donc une opération de coupe desdites premières et deuxième nappe de film 5A, 6A après chaque opération d'application, pour séparer chaque panneau 2 revêtu de film souple sur ses faces endroit 2A et envers 2B des autres panneaux subissant ensuite la même opération d'application. L'opération de coupe consiste ainsi avantageusement à découper chaque nappe 5A, 6A sur toute sa largeur, selon une direction parallèle à l'axe de rotation de chaque bobine 5, 6, pour séparer, de préférence simultanément, les portions des nappes 5A, 6A qui viennent d'être collées aux faces endroit 2A et envers 2B d'un panneau 2 du reste du film déroulé à partir de la bobine correspondante 5, 6.

Pour mettre en œuvre cette opération de coupe, le poste de coupe 11 comprend par exemple un massicot de coupe automatique qui sectionne en même temps les nappes 5A, 6A sur toute leur largeur après que le panneau 2 pré-encollé a été revêtu. Bien entendu, le poste de coupe 11 peut comprendre un moyen de coupe autre qu'un massicot de coupe automatique pour assurer l'opération de coupe entre chaque opération de placage d'un panneau 2, et par exemple mettre en œuvre une lame de coupe mobile en translation selon la largeur des nappes de films 5A, 6A. Le procédé conforme à l'invention repose ainsi sur la mise en œuvre d'une alimentation continue en film souple, par dévidement des première et deuxième bobines de film souple 5, 6, couplée à une alimentation discontinue en panneaux 2, lesquels se présentent les uns à la suite des autres et à distance les uns des autres pour défiler l'un après l'autre entre les rouleaux de pressage, 8, 9 et être ensuite séparés les uns des autres par découpe des nappes de films 5A, 6A une fois chaque panneau revêtu.

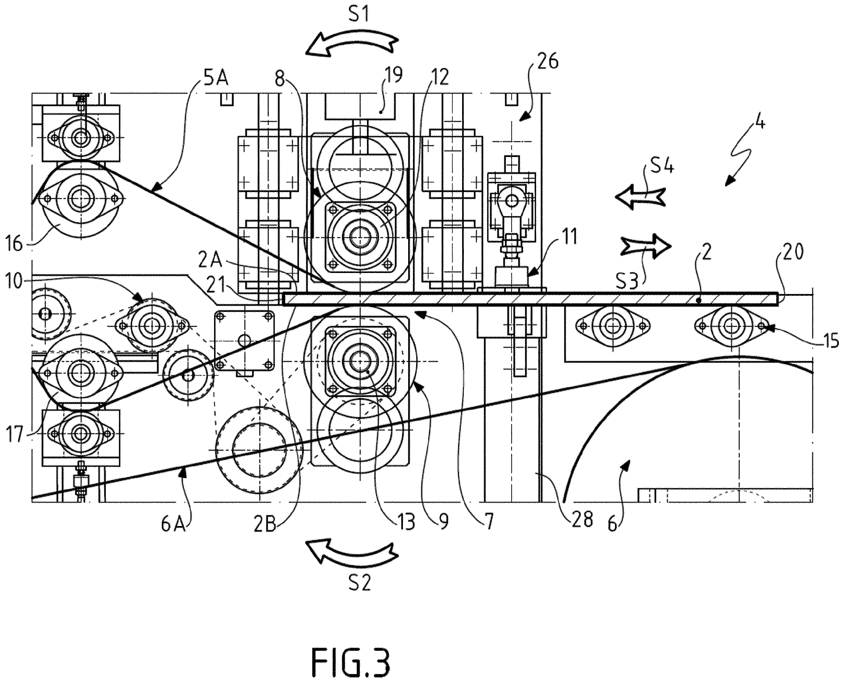

Avantageusement, au moins le premier rouleau de pressage 8 est motorisé pour contribuer à former ledit moyen d'entraînement permettant de faire défiler entre les rouleaux de pressage 8, 9 à la fois les première et deuxième nappe 5A, 6A et chaque panneau 2 pré-encollé. De préférence, le deuxième rouleau de pressage 9 est également motorisé pour contribuer lui aussi à former ledit moyen d'entraînement. Dans ce mode de réalisation préférentiel illustré aux figures, le poste d'application comprend un premier moteur 12 conçu pour, lors de l'opération d'application, mettre en rotation le premier rouleau de pressage 8 selon un premier sens de rotation qui est un sens antihoraire matérialisé par la flèche S1 dans la représentation de la figure 3. Le poste d'application 7 comprend également avantageusement un deuxième moteur 13 conçu pour, lors de l'opération d'application, entraîner en rotation le deuxième rouleau de pressage 9 selon un deuxième sens de rotation opposé au premier sens de rotation du premier rouleau de pressage 9, par exemple un sens horaire matérialisé par la flèche S2 dans la représentation de la figure 3. La mise en rotation forcée des premier et deuxième rouleaux 8, 9 selon des sens de rotation opposés, combinée à l'action de pressage exercée par lesdits rouleaux de pressage 8, 9 l'un en direction de l'autre, permet d'entraîner par friction les première et deuxième nappes 5A, 6A avec le panneau 2 pré-encollé interposé entre elles.

Afin de favoriser une adhérence locale et temporaire entre chaque rouleau de pressage 8, 9 et respectivement les première et deuxième nappes de film 5A, 6A, la surface de chaque rouleau de pressage 8, 9 est avantageusement réalisée en un matériau souple du style caoutchouc ou élastomère comme exposé précédemment. Ainsi, dans le mode de réalisation préférentiel illustré aux figures, la paire de rouleaux de pressage 8, 9 assure au moins la double fonction suivante :
- presser les première et deuxième nappes de film 5A, 6A de manière uniforme et continue contre respectivement les faces endroit 2A et envers 2B du panneau 2 pré-encollé à revêtir ;
- assurer concomitamment le défilement entre les rouleaux de pressage 8, 9 à la fois desdites première et deuxième nappe 5A, 6A et de chaque panneau 2 pré-encollé à revêtir.

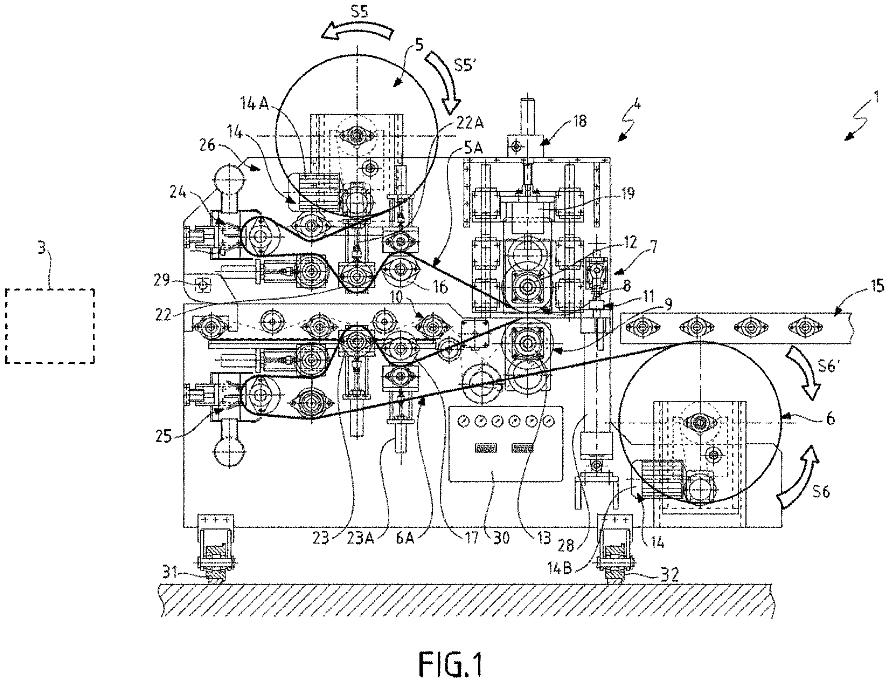

Les mouvements rotatifs opposés des premier et deuxième rouleaux de pressage 8, 9 sont ainsi transformés, par l'effet de friction évoqué précédemment, en un mouvement de translation rectiligne horizontale du complexe formé par le panneau 2 pré-encollé et les première et deuxième nappes de film 5A, 6A plaquées respectivement sur et sous le panneau 2 pré-encollé. Le mouvement de translation en question s'effectue de l'entrée du poste d'application vers la sortie de ce dernier, selon un sens d'application S3 (correspondant au sens de gauche à droite dans la représentation des figures 1 à 3).

L'installation 1 comprend avantageusement, à l'amont dudit poste d'application 7 relativement au sens de progression de chaque panneau 2 au sein de l'installation 1, un poste d'alimentation en panneaux 2 pré-encollés. Ledit poste d'alimentation en panneaux 2 pré-encollés est conçu pour transporter jusqu'au poste d'application 7 les panneaux 2 pré-encollés issus de la station de pré-encollage 3, en file les uns derrière les autres, en maintenant un espace libre entre chaque panneau 2, de sorte que les panneaux à revêtir 2 se présentent l'un après l'autre entre les rouleaux de pressage 8, 9. A cette fin le poste d'alimentation en panneaux 2 comprend des moyens d'acheminement qui se présentent par exemple sous la forme d'un convoyeur d'entrée 10, du genre tapis roulant ou convoyeur motorisé à bande ou à rouleaux, actionné par exemple par l'un des moteurs 12, 13 équipant avantageusement l'un des deux rouleaux de pressage 8, 9. Le convoyeur d'entrée 10 est capable d'entraîner les panneaux 2 pré-encollés à revêtir en translation horizontale les uns derrière les autres, selon un sens de production matérialisé par la flèche référencée S3 sur la figure 3.

Comme évoqué précédemment, lesdits moyens d'entraînement sont conçus pour entraîner le déplacement desdites première et deuxième nappes de film 5A, 6A selon un premier sens, correspondant de préférence au sens d'application S3 précité, au cours de chaque opération d'application, pour avantageusement revêtir progressivement chacune des faces endroit 2A et envers 2B par une portion respective de la première et de la deuxième nappe de film 5A, 6A. La station de placage double face 4 comprend en outre :
- un dispositif d'entraînement activable 14 conçu pour entraîner, de préférence simultanément, lesdites nappes 5A, 6A en déplacement selon un deuxième sens S4 opposé audit premier sens S3 lorsque ledit dispositif d'entraînement 14 est activé,
- et un dispositif de contrôle du dispositif d'entraînement 14, conçu pour activer temporairement et automatiquement ce dernier après chaque opération de coupe et avant chaque opération d'application.

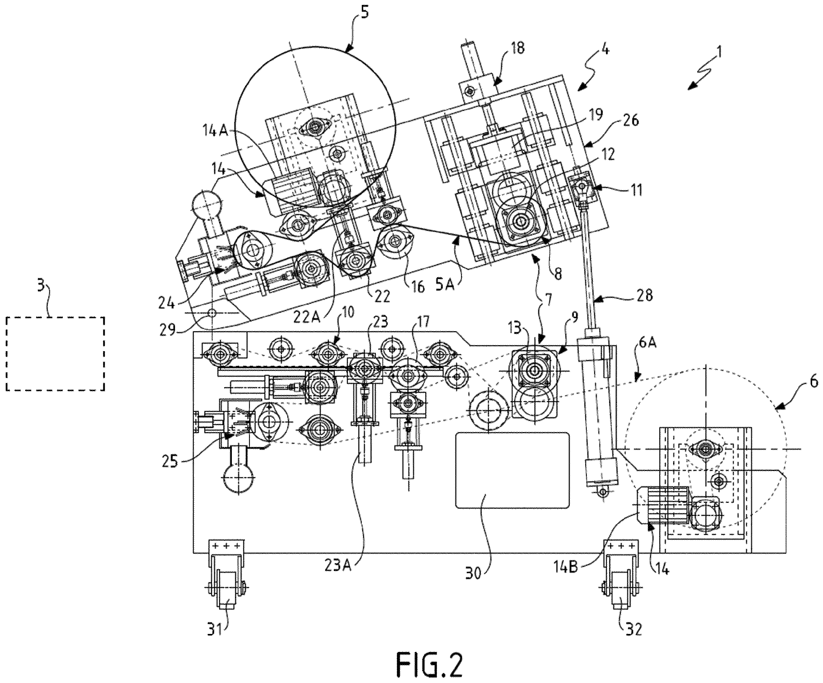

En d'autres termes, dans ce mode de réalisation avantageux, lesdits moyens d'entraînement, préférentiellement formés au moins en partie par les rouleaux de pressage 8, 9, entraînent respectivement les première et deuxième nappes de film 5A, 6A selon le premier sens S3, tandis que le dispositif d'entraînement activable 14 est désactivé, pour appliquer progressivement les première et deuxième nappes de film 5A, 6A contre respectivement la face endroit 2A et la face envers 2B de chaque panneau 2. Puis, une fois l'opération d'application terminée, c'est-à-dire que les deux faces endroit 2A et envers 2B du panneau 2 concerné sont entièrement revêtues, les moyens d'entraînement sont arrêtés (c'est-à-dire en l'espèce que les moteurs 12, 13 sont arrêtés), et le dispositif d'entraînement 14 est activé pour entraîner lesdites nappes 5A, 6A en marche arrière, selon le deuxième sens S4 opposé au premier sens S3. Ce mouvement de marche arrière ne concerne avantageusement que lesdites nappes 5A, 6A respectivement reliées aux première et deuxième bobines 5, 6, et non le panneau 2 revêtu qui lui reste immobile ou poursuit son trajet selon le premier sens S3, par exemple grâce à un convoyeur de sortie 15 du genre tapis roulant ou convoyeur motorisé à bande ou à rouleaux (non illustré par la figure 2). Au cours de chaque opération d'application lesdites première et deuxième nappes de film 5A, 6A se déplacent selon un premier sens S3, tandis qu'après chaque opération de coupe et avant chaque opération d'application, lesdites première et deuxième nappes de film 5A, 6A se déplacent selon un deuxième sens S4 opposé audit premier sens S3. Grâce à cette caractéristique, les chutes et pertes de films sont limitées. En effet, pour le bon défilement des panneaux 2, et en raison du fait que le placage est effectué simultanément sur les deux faces endroit 2A et envers 2B, la coupe des nappes 5A, 6A doit être pratiquée par le poste de coupe 11 à une distance significative des rouleaux 8, 9 et du bord arrière 21 du panneau 2 revêtu, ce qui est susceptible d'entraîner une perte de matière conséquente, correspondant à la longueur de film inutilisée entre deux panneaux 2 à revêtir consécutifs. Afin d'éviter cette perte potentiellement conséquente susceptible de majorer le coût de production, le mécanisme de « *marche arrière* » décrit ci-avant permet de ramener en arrière localement chacune des nappes 5A, 6A pour que la portion des nappes 5A, 6A qui aurait pu être perdue soit finalement réutilisée pour le panneau 2 suivant. Avantageusement, lesdites première et deuxième bobines 5, 6 sont chacune motorisées afin de pouvoir effectuer un rembobinage et ainsi contribuer à former ledit dispositif d'entraînement activable 14. Dans ce mode de réalisation préférentiel, chaque bobine tourne, au cours de l'opération d'application, dans un sens de dévidage respectif S5, S6 pour permettre l'application de films sur les deux faces endroit 2A et envers 2B de chaque panneau 2, et tourne après chaque opération de coupe et avant chaque opération d'application dans un sens de rembobinage respectif S5', S6' opposé au sens de dévidage S5, S6. Ce rembobinage simultané des premières et deuxièmes bobines 5, 6, selon une course prédéterminée, permet de faire revenir le bord libre respectif des nappes 5A, 6A en arrière, pour qu'à l'opération d'application suivante la portion des nappes 5A, 6A qui aurait pu être perdue soit utilisée pour le placage du panneau 2 suivant. De manière préférentielle, le poste de coupe 11 est intégré à la station de placage 4, et n'en constitue pas un élément distant (de plusieurs mètres par exemple). Ledit poste de coupe 11 est préférentiellement rattaché mécaniquement au reste de ladite station de placage 4, et notamment audit poste d'application 7, plus précisément juste à l'aval de ce dernier. Le poste de coupe 11 peut ainsi être à la fois à une distance suffisante des rouleaux de pressage 8, 9, comme mentionné précédemment, tout en étant à proximité relative de ces derniers pour effectuer chaque opération de coupe immédiatement ou quasi-immédiatement après l'opération d'application. Une telle configuration améliore la compacité de l'installation 1, ainsi que la rapidité générale de production de panneaux 2 revêtus, tout en permettant une économie de matière (plus précisément de film, et encore plus précisément de longueur des première et deuxième nappes 5A, 6A) comme mentionné ci-avant.

Le poste d'alimentation (en film souple) inclut donc avantageusement un premier moteur 14A destiné à entraîner en rotation, selon le sens de rembobinage S5', la première bobine 5, en étant reliée par l'intermédiaire d'un dispositif de transmission (par exemple à courroies ou à engrenages) au mandrin (premier mandrin) de la première bobine 5. Le poste d'alimentation (en film souple) comprend également de préférence un deuxième moteur 14B conçu pour mettre en rotation la deuxième bobine 6 selon le sens de rembobinage S6'. Le deuxième moteur 14B est également avantageusement relié au mandrin (deuxième mandrin) de la deuxième bobine 6 par l'intermédiaire d'un dispositif de transmission de mouvement, par exemple à courroies ou engrenages. Les deux moteurs 14A, 14B en question font ainsi partie du dispositif d'entraînement activable 14, et sont à cette fin tous deux reliés au dispositif de contrôle précité qui active automatiquement le rembobinage des première et deuxième nappes 5A, 6A après chaque opération de coupe, pour réduire les pertes.

Avantageusement, les moteurs 14A, 14B équipant respectivement les premier et deuxième mandrins des bobines 5, 6 sont débrayés pendant chaque opération d'application, de façon que lesdits mandrins sont alors montés fous en rotation et peuvent librement tourner au fur et à mesure du dévidement des nappes de film 5A, 6A. Il est également alternativement envisageable, sans pour autant que l'on sorte du cadre de l'invention, que lesdits moteurs 14A, 14B entraînent activement et simultanément chacun desdits premier et deuxième mandrins des bobines 5, 6 pendant chaque opération d'application, et contribuent de ce fait à former lesdits moyens d'entraînement.

Avantageusement, les moyens d'entraînement sont conçus pour ralentir ledit défilement des nappes 5A, 6A avant, et/ou en même temps que, chaque opération de coupe, pour contrecarrer d'éventuels effets d'inertie indésirables susceptible de nuire à la précision de l'opération de coupe. Dans ce cas le défilement desdites nappes 5A, 6A est avantageusement ralenti avant, et/ou en même temps que, chaque opération de coupe. De préférence, lesdites premières et deuxième bobines 5, 6 sont respectivement pourvues de premier et deuxième dispositifs de freinage conçus pour temporairement freiner en rotation chacune desdites bobines 5, 6 au moment de, et/ou avant, l'opération de coupe. Le procédé de l'invention prévoit donc avantageusement que les première et deuxième bobines 5, 6 sont chacune temporairement freinées en rotation au moment de, et/ou avant, chaque opération de coupe.

Ce freinage en rotation des première et deuxième bobines 5, 6 est par exemple réalisé au moyen desdits premier et deuxième moteurs 14A, 14B raccordés respectivement aux mandrins des première et deuxième bobines 5, 6, lesquels moteurs sont capables dans ce cas d'assurer une double fonction (i) de freinage des bobines 5, 6 avant, et/ou même temps, que chaque opération de coupe, et (ii) de retour arrière (rembobinage) des bobines 5, 6 après chaque opération de coupe. Le freinage des première et deuxième bobines 5, 6, avantageusement réalisé au moyen des moteurs 14A, 14B, permet d'adapter en permanence la vitesse des bobines 5, 6 à la vitesse de passage des panneaux 2 entre les rouleaux 8, 9. L'invention permet ainsi de mettre en œuvre des cadences de production élevées, avec des vitesses de déroulement des bobines 5, 6 élevées, tout en atténuant les effets d'inertie des bobines 5, 6 par un freinage temporaire desdites bobines 5, 6 en vue d'effectuer la coupe des nappes 5A, 6A. Cela permet de conserver un niveau de qualité de placage élevé, alors même que les effets d'inertie sont particulièrement marqués du fait de la masse importante des bobines et de leur vitesse de rotation élevée. Le freinage des bobines 5, 6 au moyen des moteurs 14A, 14B (lesquels sont avantageusement formés chacun d'un groupe motoréducteur) permet ainsi de pratiquer une coupe des nappes 5A, 6A particulièrement précise, en neutralisant l'éventuelle influence négative due à l'inertie des bobines 5, 6.

Avantageusement, ladite station de placage double face 4 comprend un dispositif 15 de détermination de la longueur dudit déplacement de chaque nappe 5A, 6A selon ledit deuxième sens S4. De préférence, ledit dispositif de contrôle du dispositif d'entraînement 14 est relié audit dispositif 15 de détermination de la longueur pour activer le dispositif d'entraînement 14 en fonction de la longueur déterminée par ledit dispositif 15. En d'autres termes, le dispositif 15 permet de mesurer la longueur de rembobinage de chaque nappe 5A, 6A, de façon que le dispositif de contrôle stoppe le rembobinage en question par désactivation du dispositif d'entraînement 14 dès que la longueur souhaitée de rembobinage est atteinte, cette longueur souhaitée étant prédéterminée en fonction notamment de la position relative du poste de coupe 11 et des rouleaux de pressage 8, 9. De préférence, le dispositif 15 permet également de mesurer la longueur de film déroulée dans le sens S4, c'est-à-dire la longueur de film dévidée à partir de chaque bobine 5, 6.

Le dispositif 15 comprend par exemple des rouleaux 16, 17 rotatifs dont la surface est préférentiellement revêtue d'un matériau souple de façon que chaque rouleau 16, 17 forme un rouleau gommé. Les nappes 5A, 6A viennent localement en appui contre respectivement lesdits rouleaux 16, 17 qui sont montés à rotation libre selon un axe parallèle à l'axe de rotation de chaque bobine 5, 6 et contribuent à définir les trajets respectifs de la première nappe 5A et de la deuxième nappe 6A entre respectivement la bobine 5, 6 correspondante et le rouleau de pressage 8, 9 correspondant. Ainsi le déplacement des nappes 5A, 6A entre sa bobine 5, 6 respective et le rouleau de pressage 8, 9 associé entraînera par friction la rotation simultanée du rouleau gommé 16, 17 correspondant. Chaque rouleau 16, 17 est avantageusement équipé d'un dispositif de mesure de son déplacement angulaire (sous la forme par exemple d'un codeur incrémental) qui permet d'accéder à une valeur représentative du déplacement de chaque nappe 5A, 6A dans le sens arrière S4, ainsi que de préférence dans le sens avant S3. Le dispositif 15 de détermination permet ainsi avantageusement non seulement de fournir audit dispositif de contrôle un signal utile à la commande automatique de l'opération de rembobinage mais également d'accéder en permanence à la longueur totale de film déroulée, grâce à l'information fournie par le codeur incrémental dont est avantageusement équipé chaque rouleau de mesure 16, 17 affecté à chaque nappe 5A, 6A.

Avantageusement, la station de placage double face 4 comprend un dispositif 18 de réglage de la pression exercée, de préférence simultanément, par les rouleaux de pressage 8, 9 sur lesdites première et deuxième nappes de film 5A, 6A. De préférence, le dispositif 18 de réglage de la pression est conçu pour régler l'écartement nominal des rouleaux de pressage 8, 9, afin d'adapter l'écartement en question à l'épaisseur des panneaux 2 à revêtir et des nappes de film 5A, 6A. Le dispositif 18 comprend à cette fin de préférence au moins un vérin monté relativement auxdits rouleaux de pressage 8, 9 pour permettre de régler l'écartement mutuel desdits rouleaux de pressage 8, 9. Ledit vérin est de préférence un vérin mécanique, sur la tige duquel est embarqué l'un desdits rouleaux 8, 9, par exemple le premier rouleau 8. Le vérin mécanique formant le dispositif 18 permet ainsi de déplacer en translation verticale le premier rouleau 8, tandis que le deuxième rouleau 9 reste avantageusement fixe en position, ce qui permet de régler aisément l'espace libre entre les deux rouleaux 8, 9 et, partant, la pression exercée par ces derniers, en fonction de l'épaisseur du complexe première nappe 5A / panneau 2 / deuxième nappe 6A. L'écartement mutuel des rouleaux de pressage 8, 9 est avantageusement réglé pour être légèrement inférieur à l'épaisseur nominale du complexe précité, de façon à générer une pression d'application élevée, étant entendu que le caractère souple du matériau formant avantageusement la surface des cylindres de pressage 8, 9, combiné au caractère souple des nappes de film souple 5A, 6A, permet de compenser en partie l'écart dimensionnel existant entre l'écartement mutuel nominal des rouleaux 8, 9 et l'épaisseur nominale du complexe fini obtenu.

Avantageusement, le premier rouleau 8A est monté sur la tige du vérin formant le dispositif de réglage 18 par l'intermédiaire d'un organe de compensation élastique qui autorise un débattement élastique prédéterminé du premier rouleau 8 par rapport à sa position nominale. Cet organe de compensation élastique comprend avantageusement un vérin pneumatique 19 dont le cylindre est par exemple monté fixe sur la tige du vérin mécanique formant le dispositif 18 de réglage, tandis que le rouleau de pressage 8 est embarqué sur la tige du vérin pneumatique 19. Le vérin pneumatique 19 est mis en pression à un niveau suffisant pour bloquer cette tige dans une position prédéterminée tout en autorisant un certain débattement élastique de cette dernière, procurant ainsi un effet ressort. Le recours à un vérin pneumatique 19 n'est bien entendu pas obligatoire, et il est par exemple tout à fait possible de recourir plutôt à un ressort pour mettre en œuvre cette fonction de compensation qui permet à l'installation de s'adapter facilement à différentes épaisseurs de panneaux 2 et de nappes de film souple 5A, 6A.

Le montage en série d'un vérin mécanique de réglage de l'écartement et d'un vérin pneumatique de compensation s'avère particulièrement avantageux en ce qu'il permet de conserver la possibilité d'un réglage fin de la pression d'application tout en bénéficiant d'une adaptation automatique du poste d'application 7 à une large gamme de panneaux et de films.

Avantageusement, la station de placage double face 4 comprend également :
- un premier rouleau de guidage 22 contre lequel vient localement en appui ladite première nappe 5A pour que ledit premier rouleau de guidage 22 contribue à définir le trajet de la première nappe 5A entre ladite première bobine 5 et ledit premier rouleau de pressage 8,
- et un deuxième rouleau de guidage 23, contre lequel vient localement en appui ladite deuxième nappe 6A pour que ledit deuxième rouleau de guidage 23 contribue à définir le trajet de la deuxième nappe 6A entre ladite deuxième bobine 6 et ledit deuxième rouleau de pressage 9.

Chacun desdits premier et deuxième rouleau de guidage 22, 23 est avantageusement monté libre en rotation, et fait partie, avec notamment les rouleaux 16, 17 de mesure de la longueur de film déroulée/rembobinée, d'un ensemble de moyens de guidage qui guident chaque nappe 5A, 6A entre lesdites première et deuxième bobines 5, 6 et respectivement le premier rouleau de pressage 8 et le deuxième rouleau de pressage 9. Avantageusement, les premier et deuxième rouleaux de guidage 22, 23 sont montés sur des premier et deuxième dispositifs d'amortissement respectif 22A, 23A. Ces dispositifs d'amortissement 22A, 23A comprennent par exemple chacun un vérin d'amortissement pneumatique. Les premier et deuxième dispositifs d'amortissement 22A, 23A permettent de compenser les effets d'inertie à l'arrêt et au démarrage de la station de placage 4, permettant ainsi de préserver l'intégrité du matériel et de favoriser un niveau de précision remarquable.

Avantageusement, ladite station de placage 4 comprend, à l'amont du poste d'application 7, un poste de traitement Corona desdites première et deuxième nappes 5A, 6A. Le traitement Corona modifie la tension de surface de chacune des première et deuxième nappes 5A, 6A, ce qui permet d'obtenir un collage particulièrement efficace et durable, surtout si les films souples de placage sont des films en PVC. L'étape de placage du procédé selon l'invention comprend donc avantageusement, avant l'opération d'application, et de préférence juste avant cette dernière, une opération de traitement Corona desdites première et deuxième nappes 5A, 6A pour améliorer le collage des nappes 5A, 6A contre respectivement la face endroit 2A et la face envers 2B.

Le poste de traitement Corona comprend à cet effet classiquement une première station 24 de traitement Corona de la première nappe 5A et une deuxième station 25 de traitement Corona de la deuxième nappe 6A, chaque station 24, 25 incluant par exemple un générateur haute fréquence, un transformateur haute tension, des électrodes et un dispositif d'évacuation de l'ozone produite par le traitement Corona.

Avantageusement, la station de placage double face 4 comprend un bâti destiné à reposer de manière stable sur le sol. Ledit bâti inclut d'une part un châssis supérieur 26, lequel embarque au moins ladite première bobine 5 et ledit premier rouleau de pressage 8, et d'autre part un châssis inférieur 27 destiné à reposer sur le sol et qui embarque au moins ladite deuxième bobine 6 et ledit deuxième rouleau de pressage 9. Le châssis inférieur 27 supporte avantageusement le châssis supérieur 26, comme illustré aux figures. Avantageusement, lesdits châssis supérieur 26 et inférieur 27 sont articulés entre eux pour permettre au châssis supérieur 26 de passer d'une position ouverte (illustré à la figure 2) facilitant l'installation de la deuxième nappe 5A entre la deuxième bobine 5 et le deuxième rouleau de pressage 8, à une position fermée (figures 1 et 3) permettant d'effectuer l'opération d'application pour chaque panneau 2 pré-encollé. De préférence, cette articulation entre les châssis supérieur 26 et inférieur 27 est réalisé au moyen d'une charnière 29 d'axe horizontal avantageusement parallèle aux axes de rotation des bobines 5, 6 et des rouleaux de pressage 8, 9. Le passage de la position ouverte à la position fermée et réciproquement est commandée par un au moins un vérin 28 monté entre les châssis supérieur 26 et inférieur 27 de façon que l'une des extrémités (correspondant à la tête de la tige du vérin 28) est attaché à pivotement au châssis supérieur 26, tandis que l'autre extrémité du vérin, correspondant à la base du cylindre du vérin 28, est attachée à pivotement au châssis inférieur 27. La charnière 29 et le vérin 28 sont disposés respectivement en deux extrémités opposées des châssis 26, 27, afin de permettre un débattement d'ouverture important. En position ouverte (illustré à la figure 2), un utilisateur peut ainsi aisément accéder aux différents éléments définissant le cheminement de chaque nappe 5A, 6A à l'intérieur du bâti, et en particulier de la nappe inférieure 6A. Cela permet à l'utilisateur, préalablement au lancement d'une série de production, d'installer manuellement chaque nappe 5A, 6A, et notamment la deuxième nappe 6A, c'est-à-dire de la faire passer manuellement contre les différents rouleaux 17, 23 guidant son trajet jusqu'au deuxième rouleau de pressage 9. Grâce à cette caractéristique selon laquelle la première bobine 5 et le premier rouleau de pressage 8 sont embarqués sur un châssis supérieur 26, tandis que la deuxième bobine 6 et le deuxième rouleau de pressage 9 sont embarqués sur un châssis inférieur 27 articulé au châssis supérieur 26, les opérations requises préalablement à la production sont facilitées en permettant la mise en œuvre d'une étape de préparation au cours de laquelle :
- on fait pivoter le châssis supérieur 26 relativement au châssis inférieur 27 pour ménager un accès entre les rouleaux 8, 9,
- et on installe notamment la deuxième nappe 6A entre la deuxième bobine 5 et le deuxième rouleau de pressage 9.

Afin d'optimiser le chargement mécanisé des bobines 5, 6, le bâti 26, 27 est avantageusement monté mobile relativement au sol parallèlement aux axes de rotation des bobines 5, 6. A cette fin, le châssis inférieur 27 est par exemple pourvu sur sa face inférieure de roulettes 31, 32 dont les axes de rotation respectifs s'étendent sensiblement perpendiculairement aux axes de rotation des bobines 5, 6. Les roulettes 31, 32 sont ainsi agencées pour permettre une translation transversale qui facilite l'installation des bobines 5, 6 sur le bâti. Les roulettes 31, 32 peuvent éventuellement coopérer avec un système de rails de guidage attaché au sol.

Le déroulement du procédé de placage avantageusement mis en œuvre au moyen de l'installation 1 décrite dans ce qui précède est le suivant.

L'utilisateur installe tout d'abord les bobines 5, 6, en insérant le mandrin de la première bobine 5 sur un arbre horizontal relié au moteur 14A, et en insérant la deuxième bobine 6 sur un autre arbre horizontal relié au moteur 14B.

L'utilisateur actionne ensuite, via par exemple une armoire de commande 30 embarquée sur le châssis inférieur 27, le vérin 28 (ou les vérins, si plusieurs vérins, par exemple au nombre de deux, sont mis en œuvre) pour faire passer le bâti de sa position fermée à sa position ouverte (figure 2). Dans cette position ouverte, l'utilisateur peut accéder à l'intérieur du bâti et déroule alors manuellement chacune des bobines 5, 6 pour disposer les nappes 5A, 6A selon un cheminement défini par différents rouleaux, dont font partie les premier et deuxième rouleaux de guidage 22, 23 et les rouleaux de mesure 16, 17, jusqu'à positionner le bord libre de chaque nappe 5A, 6A légèrement à l'aval des rouleaux de pressage 8, 9, et plus précisément légèrement à l'aval du plan vertical dans lequel s'inscrivent les axes de rotation des rouleaux de pressage 8, 9, en considération du sens d'application S3. Le (ou les) vérin(s) 28 est (sont) ensuite actionné(s) pour faire passer le bâti de sa position ouverte à sa position fermée (figures 1 et 3) permettant l'application.

Un premier panneau 2 pré-encollé, provenant de la station de pré-encollage double face 3, est déposé sur le convoyeur 10, par exemple manuellement ou au moyen d'un système de manipulation mécanisé et/ou automatisé. Ledit premier panneau 2 pré-encollé est transporté par le convoyeur 10 selon le premier sens de déplacement S3 puis l'entraînement du panneau 2 en question dans le premier sens S3 est ensuite assuré par les premier et deuxième rouleaux 8, 9 qui pressent en même temps localement les première et deuxième nappes 5A, 6A contre respectivement la face endroit 2A et la face envers 2B du panneau 2 pré-encollé. Une fois lesdites faces endroit 2A et envers 2B entièrement recouvertes, le panneau 2 poursuit sa trajectoire de translation rectiligne horizontale dans le sens S3, trajectoire qui est assurée en sortie du poste d'application 7 par le convoyeur de sortie 15. Un dispositif de détection du panneau 2 déclenche alors l'opération de coupe des nappes de film 5A, 6A. Au moment de la coupe et/ou dans les instants précédant immédiatement celle-ci, les premier et deuxième mandrins des bobines 5, 6 sont freinés simultanément au moyen des moteurs 14A, 14B. Ladite opération de coupe est de préférence mise en œuvre à la volée (sans interrompre le déplacement du panneau 2 revêtu), avec le massicot du poste de coupe 11, pour séparer le panneau 2 revêtu des nappes 5A, 6A issue des bobines 5, 6. Chaque nappe 5A, 6A est ensuite rembobinée sur une longueur prédéterminée grâce aux moteurs 14A, 14B agissant simultanément sur les mandrins des bobines 5, 6, et le processus est ensuite répété pour un autre panneau 2. Chaque panneau 2 revêtu est évacué l'un après l'autre de l'installation 1 par le convoyeur de sortie 15 qui emmène chaque panneau 2 revêtu vers un dispositif de déchargement.

Le dispositif de déchargement met par exemple en œuvre une ventouse surfacique de grande dimension, incluant une interface en mousse poreuse pour répartir la pression sur l'ensemble du panneau 2 dont les faces 2A, 2B sont habillées de film souple. Grâce à cette ventouse surfacique chaque panneau 2 revêtu peut être saisi et empilé pour stockage avant de subir éventuellement des opérations de façonnage complémentaires, suivies d'opérations de conditionnement et d'expédition. Ce système de ventouse surfacique de grande dimension en mousse poreuse permet d'éviter de laisser des marques sur le film souple de revêtement habillant les faces endroit 2A et envers 2B.

L'invention permet ainsi de produire à cadence élevée, et en minimisant les pertes, des panneaux plans rigides revêtus sur leurs deux faces 2A, 2B avec un niveau de qualité remarquable. La conception spécifique de la machine lui permet également de procéder au besoin à des opérations de placage simple-face de la face endroit ou de la face envers uniquement, auquel cas la station de pré-encollage 3 est évidemment adaptée en conséquence.

## Revendications

1. Installation (1) de placage pour revêtir de film souple des panneaux (2) plans rigides et individualisés présentant chacun des faces endroit (2A) et envers (2B) opposées, ladite installation (1) comprenant une station de pré-encollage double-face (3) pour enduire lesdites faces endroit (2A) et envers (2B) de chaque panneau (2) d'une couche de colle, afin d'obtenir des panneaux (2) pré-encollés, ladite installation (1) comprenant en outre à l'aval de ladite station de pré-encollage double-face (3) une station de placage double-face (4) qui elle-même inclut :
- un poste d'alimentation en film souple, comprenant des première et deuxième bobines de film souple (5, 6) à partir desquelles sont respectivement déroulées des première et deuxième nappes de film (5A, 6A),
- un poste d'application (7) pour effectuer une opération d'application de film souple simultanément sur les faces endroit (2A) et envers (2B) de chaque panneau (2) pré-encollé, ledit poste d'application (7) comprenant des premier et deuxième rouleaux de pressage (8, 9) ainsi que des moyens d'entraînement (8, 9) pour faire défiler entre lesdits rouleaux de pressage (8, 9) à la fois lesdites première et deuxième nappes (5A, 6A) et chaque panneau (2) pré-encollé interposé entre lesdites nappes (5A, 6A), lesdits premier et deuxième rouleaux de pressage (8, 9) étant conçus pour presser localement les première et deuxième nappes de film (5A, 6A) contre respectivement la face endroit (2A) et la face envers (2B) de chaque panneau (2) pré-encollé défilant entre lesdits rouleaux de pressage (8, 9),
- et un poste de coupe (11) pour effectuer une opération de coupe desdites nappes de film (5A, 6A) après chaque opération d'application,
lesdits moyens d'entraînement étant conçus pour entraîner le déplacement desdites première et deuxième nappes de film (5A, 6A) selon un premier sens (S3) au cours de chaque opération d'application, ladite station de placage (4) comprenant en outre :
- un dispositif d'entraînement activable (14) conçu pour entraîner lesdites nappes (5A, 6A) en déplacement selon un deuxième sens (S4) opposé audit premier sens (S3) lorsqu'il est activé,
- un dispositif de contrôle du dispositif d'entraînement (14) conçu pour activer temporairement et automatiquement ce dernier après chaque opération de coupe et avant chaque opération d'application.

2. Installation (1) selon la revendication 1 **caractérisée en ce qu'**au moins le premier rouleau de pressage (8) est motorisé pour contribuer à former lesdits moyens d'entraînement, le deuxième rouleau de pressage (9) étant de préférence également motorisé pour contribuer à former lesdits moyens d'entraînement.

3. Installation (1) selon l'une quelconque des revendications précédentes, **caractérisée en ce que** lesdites première et deuxième bobines (5, 6) sont chacune motorisées afin de pouvoir effectuer un rembobinage et ainsi contribuer à former ledit dispositif d'entraînement activable (14).

4. Installation (1) selon l'une quelconque des revendications précédentes, **caractérisée en ce que** ladite station de placage comprend un dispositif (15) de détermination de la longueur dudit déplacement de chaque nappe (5A, 6A) selon ledit deuxième sens (S4), ledit dispositif de contrôle étant relié audit dispositif (15) de détermination pour activer ledit dispositif d'entraînement en fonction de ladite longueur déterminée par ledit dispositif (15) de détermination.

5. Installation (1) selon les revendications 3 et 4, **caractérisé en ce que** le dispositif (15) permet de mesurer la longueur de rembobinage de chaque nappe (5A, 6A), de façon que le dispositif de contrôle stoppe le rembobinage en question par désactivation du dispositif d'entraînement (14) dès que la longueur souhaitée de rembobinage est atteinte, cette longueur souhaitée étant prédéterminée en fonction notamment de la position relative du poste de coupe (11) et des rouleaux de pressage (8, 9).

6. Installation (1) selon l'une des revendications précédentes **caractérisée en ce que** ladite station de placage (4) comprend un dispositif (18) de réglage de la pression exercée par les rouleaux de pressage (8, 9) sur lesdites nappes (5A, 6A), ledit dispositif de réglage (18) de la pression comprenant de préférence au moins un vérin monté relativement auxdits rouleaux de pressage (8, 9) pour permettre de régler l'écartement mutuel desdits rouleaux de pressage (8, 9).

7. Installation (1) selon l'une des revendications précédentes **caractérisée en ce que** ladite station de placage (4) comprend également :
- un premier rouleau de guidage (22), contre lequel vient localement en appui ladite première nappe (5A) pour que ledit premier rouleau de guidage (22) contribue à définir le trajet de la première nappe (5A) entre ladite première bobine (5) et ledit premier rouleau de pressage (8),
- et un deuxième rouleau de guidage (23), contre lequel vient localement en appui ladite deuxième nappe (6A) pour que ledit deuxième rouleau de guidage (23) contribue à définir le trajet de la deuxième nappe (6A) entre ladite deuxième bobine (6) et ledit deuxième rouleau de pressage (9),
lesdits premier et deuxième rouleaux de guidage (22, 23) étant montés sur des premier et deuxième dispositifs d'amortissement respectifs (22A, 23A).

8. Installation (1) selon l'une des revendications précédentes **caractérisée en ce que** lesdites première et deuxième bobines (5, 6) sont respectivement pourvues de premier et deuxième dispositifs de freinage conçus pour temporairement freiner en rotation chacune desdites bobines (5, 6) au moment de, et/ou avant, l'opération de coupe.

9. Installation (1) selon l'une des revendications précédentes **caractérisée en ce que** ladite station de placage (4) comprend, à l'amont dudit poste d'application (7), un poste de traitement Corona (24, 25) desdites première et deuxième nappes (5A, 6A).

10. Installation (1) selon l'une des revendications précédentes **caractérisée en ce que** ladite station de placage (4) comprend un bâti qui inclut d'une part un châssis supérieur (26), lequel embarque au moins ladite première bobine (5) et ledit premier rouleau de pressage (8), et d'autre part un châssis inférieur (27) destiné à reposer sur le sol et qui embarque au moins ladite deuxième bobine (6) et ledit deuxième rouleau de pressage (9), lesdits châssis supérieur (26) et inférieur (27) étant articulés entre eux pour permettre au châssis supérieur (26) de passer d'une position ouverte facilitant l'installation de la deuxième nappe (6A) entre la deuxième bobine (6) et le deuxième rouleau de pressage (9), à une position fermée permettant d'effectuer les opérations d'application.

11. Procédé de placage pour revêtir de film souple des panneaux (2) plans rigides et individualisés présentant chacun des faces endroit (2A) et envers (2B) opposées, ledit procédé comprenant une étape de pré-encollage double-face pour enduire lesdites faces endroit (2A) et envers (2B) de chaque panneau (2) d'une couche de colle, afin d'obtenir des panneaux (2) pré-encollés, ledit procédé comprenant en outre, après ladite étape de pré-encollage double-face, une étape de placage double-face desdits panneaux (2) pré-encollés qui elle-même inclut :
- une opération d'application de film souple simultanément sur les faces endroit (2A) et envers (2B) de chaque panneau (2) pré-encollé, au cours de laquelle on interpose chaque panneau (2) pré-encollé entre des première et deuxième nappes de film souple (5A, 6A) déroulées à partir respectivement d'une première et d'une deuxième bobine (5, 6), et on fait défiler entre des premier et deuxième rouleaux de pressage (8, 9) à la fois lesdites première et deuxième nappes (5A, 6A) et chaque panneau (2) pré-encollé interposé entre elles, lesdits premier et deuxième rouleaux de pressage (8, 9) pressant localement les première et deuxième nappes de film (5A, 6A) contre respectivement la face endroit (2A) et la face envers (2B) de chaque panneau (2) encollé défilant entre lesdits rouleaux de pressage (8, 9),
- et une opération de coupe desdites nappes de film (5A, 6A) après chaque opération d'application,
et au cours de chaque opération d'application, lesdites première et deuxième nappes de film (5A, 6A) se déplacent selon un premier sens (S3), tandis qu'après chaque opération de coupe et avant chaque opération d'application, lesdites première et deuxième nappes de film (5A, 6A) se déplacent selon un deuxième sens (S4) opposé audit premier sens (S3).

12. Procédé selon la revendication 11 **caractérisé en ce que** ledit défilement desdites nappes (5A, 6A) est ralenti avant, et/ou en même temps que, chaque opération de coupe.

13. Procédé selon la revendication précédente **caractérisé en ce que** lesdites première et deuxième bobines (5, 6) sont chacune temporairement freinées en rotation au moment de, et/ou avant, chaque opération de coupe.

14. Procédé selon l'une des revendications 11 à 13 **caractérisé en ce que** ladite étape de placage comprend, avant l'opération d'application, une opération de traitement Corona desdites première et deuxième nappes (5A, 6A).

15. Procédé selon l'une des revendications 11 à 14 **caractérisé en ce que** ladite première bobine (5) et ledit premier rouleau de pressage (8) sont embarqués sur un châssis supérieur (26), tandis que ladite deuxième bobine (6) et ledit deuxième rouleau de pressage (9) sont embarqués sur un châssis inférieur (27) destiné à reposer sur le sol, lesdits châssis supérieur (26) et inférieur (27) étant articulés entre eux, ledit procédé comprenant une étape de préparation au cours de laquelle on fait pivoter le châssis supérieur (26) relativement au châssis inférieur (27) pour ménager un accès entre les rouleaux (8, 9), et on installe la deuxième nappe (6A) entre la deuxième bobine (6) et le deuxième rouleau de pressage (9).
